Europäisches Patentamt

European Patent Office

Office européen des brevets

(19)

(11) Numéro de publication : **0 165 862 B1**

(12) **FASCICULE DE BREVET EUROPÉEN**

(45) Date de publication du fascicule du brevet :
07.09.88

(21) Numéro de dépôt : 85401174.9

(22) Date de dépôt : 13.06.85

(51) Int. Cl.⁴ : **B 01 D 53/20, B 01 J 35/06, B 01 J 47/12, B 01 D 17/02, C 02 F 3/10**

(54) **Matériau à grande surface spécifique et ses applications pour favoriser le contact entre des milieux ou des réactifs impliquant des phénomènes physiques et/ou chimiques, et/ou biologiques.**

(30) Priorité : 14.06.84 FR 8409333

(43) Date de publication de la demande :
27.12.85 Bulletin 85/52

(45) Mention de la délivrance du brevet :
07.09.88 Bulletin 88/36

(84) Etats contractants désignés :
AT BE CH DE FR GB IT LI LU NL SE

(56) Documents cités :
EP-A- 0 056 083
DE-A- 2 230 725
FR-A- 2 375 280
US-A- 3 668 118
US-A- 3 794 583

(73) Titulaire : **INSTITUT NATIONAL DE RECHERCHE CHI-MIQUE APPLIQUEE**
**18 Bis, Boulevard de la Bastille**
**F-75012 Paris (FR)**

(72) Inventeur : **Zhang, Chong-Hua Min. of Urban and Rural**
**construction and Environmental Protection of the People's Republic of China Beijing (CN)**
Inventeur : **Mavel, Gérard**
**8 rue R. Roeckel**
**F-92160 Antony (FR)**
Inventeur : **Meyer, François**
**19 rue de Gien**
**F-91540 Mennecy (FR)**

(74) Mandataire : **Rinuy, Santarelli**
**14, avenue de la Grande Armée**
**F-75017 Paris (FR)**

# 0 165 862

**Description**

La présente invention concerne un arrangement de matériau de garnissage présentant une grande surface spécifique par rapport à son volume apparent.

L'invention concerne également les applications d'un tel arrangement pour favoriser le contact en phase hétérogène entre des milieux ou des réactifs impliquant des phénomènes physiques et/ou biologiques, et/ou biochimiques.

Dans les domaines impliquant de tels phénomènes, on fait couramment appel à des éléments introduits dans le milieu réactionnel pour favoriser les échanges ou les réactions entre les réactifs mis en présence. Ces éléments peuvent se présenter sous différentes formes et ils sont en général dénommés « éléments de garnissage ». Une des caractéristiques recherchées pour de tels éléments est la surface spécifique ou surface de contact qui doit être la plus grande possible, de façon à accroître, par rapport à l'unité de volume, le taux d'échange ou de réaction entre les corps ou les substances mis en présence, tout en gênant le moins possible les transferts de masse et/ou de chaleur.

Ceci explique les formes diverses que l'on donne à ces éléments de garnissage telles que des formes d'anneaux, de selles, de tubes cloisonnés, de plaques gaufrées, de feuilles ondulées, de billes, etc.

Ces éléments peuvent être réalisés à partir de la substance servant elle-même de catalyseur et/ou de réactif ou à partir d'une substance destinée à constituer un support pour ledit catalyseur et/ou réactif.

C'est ainsi par exemple que l'on a assisté, au cours des dernières années, au développement d'éléments de garnissage constitués par des résines sous forme de billes, de grains ou de membranes sur lesquels sont déposées ou greffées les substances catalytiques ou réactives. Sous forme de billes ou de grains, ces éléments de garnissage sont le plus souvent utilisés dans des réacteurs en lits fixes ou fluidisés. On connait les limites d'emploi des lits fixes, dues entre autres à une importante perte de charge, à une tendance au colmatage et phénomènes analogues, ainsi que les limites d'emploi de lits fluidisés dues entre autres à la nécessité d'un réglage relativement très précis des paramètres hydrodynamiques, à la perte du matériau support par entraînement et phénomènes analogues.

On a également assisté ces dernières années à l'utilisation, comme éléments de garnissage ou éléments supports, de fibres, textiles ou non, dont on se sert sous la forme de bourre que l'on dispose dans un réacteur. Bien que ces éléments aient apporté un certain perfectionnement par rapport aux éléments précédemment connus, les inconvénients dus aux pertes de charge, au colmatage et autres phénomènes ne sont pas entièrement éliminés. Il en est de même pour les éléments de garnissage pouvant se présenter sous forme de plaques ou de cadres sur lesquels sont appliquées ou tendues des pièces du type tissu, toile, tamis, filets, grilles. Dans ce cas, on rencontre également les phénomènes et les inconvénients rappelés ci-dessus.

On connaît aussi, dans le domaine de l'épuration des eaux, des garnissages constitués de nappes de feuilles ; on a également cherché dans ce domaine à remplacer ces nappes par des surfaces ondulées comme décrit dans le brevet français 2 005 155, ou même augmenter la surface de contact en remplaçant les feuilles par des faisceaux de fibres ou de bandes comme dans le brevet U-S-4 088 571 qui utilise des supports verticaux dont la surface est activée par de la silice colloïdale, pendant librement dans l'appareil de purification ou le brevet U-S-4 219 420 qui concerne un filtre garni de bouquets de fibres longues ayant une direction préférentielle qui est maintenue pendant toute l'opération.

Tous ces garnissages sont réalisés dans un but particulier : il s'agit de remplir un percolateur ou un lit bactérien à ruissellement; les bandes ou feuilles ou fibres utilisées ont toujours une orientation préférentielle qui est celle de l'écoulement du flux du liquide.

De même, le brevet européen 0 056 083 concerne un garnissage pour lit non immergé constitué de bandes flexibles arrangées de façon désordonnée en faisceaux. Ces bandes sont de grande longueur (plusieurs mètres) et leurs extrémités libres vont de préférence jusqu'au fond du filtre. Un des avantages d'un tel dispositif est qu'il permet un rapport surface/volume ajustable en faisant varier le nombre de faisceaux ou la forme et la section des bandes, mais il s'agit, là encore, d'un garnissage destiné à un lit immergé ; même si les bandes sont souples, elles ne peuvent pas flotter dans le milieu, puisqu'il y a écoulement du fluide le long de ces bandes dans une direction privilégiée. Par ailleurs, si pour une autre utilisation on essayait de faire flotter des bandes, elles viendraient nécessairement s'emmêler les unes avec les autres.

L'idée d'utiliser des bandes longues en tant que substrat pour filtre biologique ressort également du brevet français 2 421 146. La partie essentielle du garnissage est constitué de «bandes» allongées; mais ces bandes ont des « surfaces » particulières, elles peuvent, entre autre, porter des sortes de « pétales » qui y sont fixés de façon souple. La bande est suspendue dans le milieu et peut s'y déplacer ainsi que les « surfaces » qui y sont ajoutées ; elle peut aussi être lestée. On trouve donc dans ce brevet la notion de supports qui flottent dans le milieu ayant pour but de favoriser des variations de flux hydraulique à l'intérieur du filtre biologique en vue de réduire les zones « mortes » dans le réacteur.

Le demandeur a au contraire cherché à développer un support qui n'apporte pas de telles variations.

Par ailleurs, on connaît des dispositifs de filtration tels que ceux présentés dans le brevet U-S-4 167 482 contenant des bouquets de fibres, courtes ou longues, susceptibles de se tasser, de s'emmêler contre un support auquel elles sont fixées durant l'opération de filtration proprement dite pour retenir les

2

matières solides à filtrer et dont on utilise l'aptitude à flotter pour les débarrasser, par un lavage à contre-courant, des solides retenus.

Aucun des garnissages cités précédemment n'associe une grande surface spécifique permettant de favoriser les échanges, un grand taux de vide qui permet une modification minimale du régime hydraulique et une structure destinée à limiter les risques de colmatage.

La présente invention se propose par conséquent de fournir un arrangement de matériau de garnissage comprenant une pluralité de pompons, chaque pompon étant constitué par une pluralité de brins de fils, de filaments ou de bandelettes réunis en leur milieu, les points assurant les réunions de ces brins de fils, de filaments ou de bandelettes de chaque pompon étant maintenu fixe par rapport à eux-mêmes par un moyen support ; caractérisé par le fait que chacun des brins, des fils, des filaments ou des bandelettes a une longueur telle et est monté de façon telle que lorsque plongé dans un milieu fluide liquide ou gazeux chacun d'entre eux soit indépendant dans ses mouvements et qu'il puisse se déployer librement et aisément sans que lesdits brins, fils, filaments ou bandelettes ne s'entremêlent dans un même pompon, deux desdits points de réunion de pompons voisins étant montés de façon que lorsque les pompons sont plongés dans le milieu fluide les brins, les fils, les filaments ou les bandelettes desdits pompons voisins ne puissent s'entremêler.

Suivant d'autres caractéristiques :
— La surface spécifique de chaque pompon est ajustable en fonction des besoins de l'application à laquelle cet arrangement est destiné, cette surface spécifique pouvant aisément dépassé 1 000 m$^2$/m$^3$ de volume apparent ;
— Le moyen support maintenant chaque pompon en position fixe par rapport aux pompons voisins est un élément d'accrochage commun souple ou rigide faisant office d'un fil tendeur.
— Les éléments d'accrochage peuvent faire partie d'un ensemble plan, d'un réseau à trois dimensions ou de tout autre volume géométrique approprié.
— La distance séparant les points de fixation des pompons sur un même fil tendeur est au moins égale au rayon moyen des pompons et la distance séparant deux fils tendeurs est au moins égale au diamètre moyen des pompons.
— Les brins, fils, filaments, bandelettes sont en une matière inerte destinée à servir de support ou d'autant de zones de liaison pour les substances destinées à servir de substances catalytiques, de sites d'échanges ou d'agents réactifs par rapport aux substances ou constituants présents dans le milieu ambiant fluide ;
— Les brins, fils, filaments ou bandelettes sont en un matériau constituant lui-même l'agent réactif ou le catalyseur pour les constituants présents dans le milieu fluide.
— La présente invention trouve des applications intéressant le domaine de la catalyse de l'épuration des effluents, de la fermentation alcoolique, des réactions biologiques et/ou biochimiques, des séparations de phases.
— d'autres caractéristiques et les avantages de l'invention ressortiront plus clairement de la description qui va suivre, faite en regard des dessins annexés sur lesquels :
— la figure 1 représente une série de pompons vus en plans selon l'invention, plongés librement dans un milieu fluide;
— la figure 2 représente vu en élévation, un exemple de montage des mêmes pompons accrochés à un système de fils tendeurs, et,
— la figure 3 représente un mode de réalisation possible d'un montage de pompons selon l'invention dans un réseau à trois dimensions.
— la figure 4 représente un réacteur de laboratoire utilisé pour le traitement anaérobie des effluents organiques.

En se référant à ces figures, le matériau selon la présente invention de présente sous la forme d'une pluralité de brins, fils, filaments ou bandelettes schématisés en (1), rassemblés entre eux en un point (2) pour former un pompon désigné par la référence générale (3).

Lorsqu'un tel pompon est plongé dans un milieu fluide schématisé en (4), on conçoit fort bien que chacun de ces brins, fils, filaments ou bandelettes pourra flotter ou nager librement dans un courant gazeux ou dans un liquide (agité ou non). On comprendra alors que suivant la nature et/ou les propriétés physico-chimiques des brins, fils, filaments ou bandelettes, ces pompons peuvent servir d'éléments de garnissage en vue de favoriser le contact ou les échanges entre des éléments présents dans ledit milieu (4). C'est ainsi que ces brins, fils, filaments ou bandelettes pourront être réalisés en une substance inerte du type matière plastique synthétique ou naturelle, matière textile synthétique ou naturelle, soit sur lesquels on a déjà fixé une substance active du point de vue physique ou chimique telle qu'une substance adsorbante (activité physique) ou une substance catalytique (activité chimique ou physico-chimique), soit qui servent de support à un agent réactif en cours de réaction.

De même, les brins, fils, filaments ou bandelettes (1) peuvent eux-mêmes être constitués par une substance à activité physico-chimique. On citera par exemple comme matériau intéressant, des fibres à base de métaux, de carbone, de tungstène, d'aluminium, d'oxydes métalliques, etc.

On peut se servir directement de ces pompons (3) pour garnir un réacteur sans risque de rencontrer les phénomènes de bourrage ou de colmatage et avec le minimum de perte de charge, contrairement aux matériaux de garnissage actuellement connus et qui ont été rappelés ci-dessus.

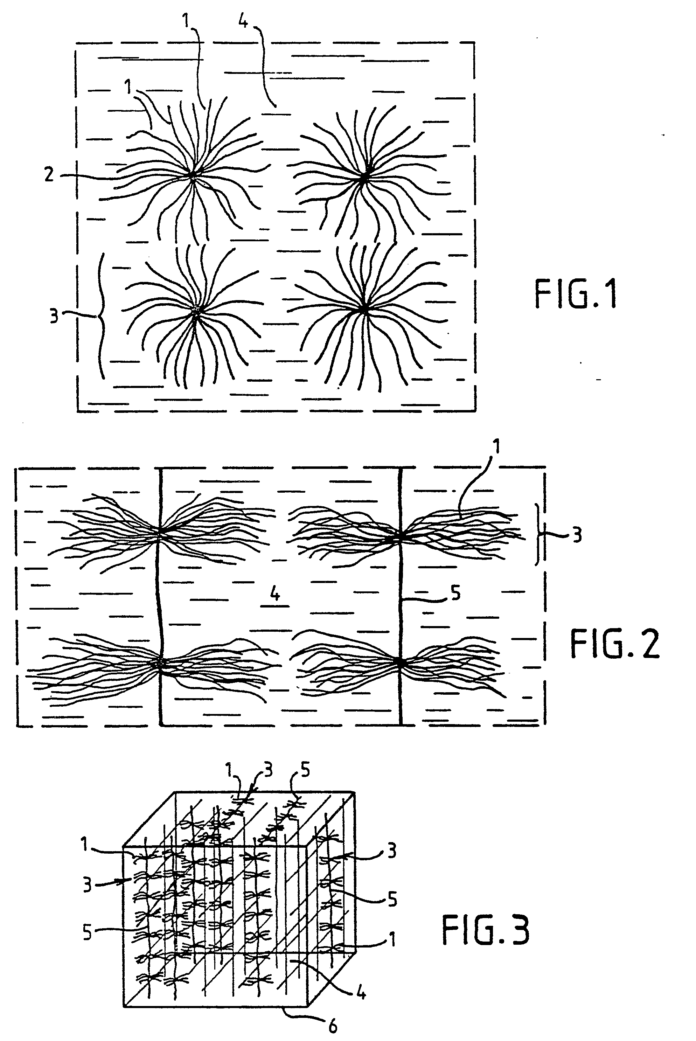

On peut également accrocher chacun de ces pompons à un élément (5) souple ou rigide de configuration quelconque. Dans la forme de réalisation illustrée à la figure 2, cet élément est un fil tendeur rectiligne, étant bien entendu qu'il pourrait se présenter sous forme d'une ligne brisée, d'une hélice ou d'une spirale, etc. Plusieurs de ces fils tendeurs (5) peuvent alors être disposés de toute manière appropriée au sein d'un réacteur, à une certaine distance les uns des autres, de manière à occuper le volume voulu par le plus grand nombre de ces pompons. L'intérêt d'une telle disposition réside dans l'immobilisation en position relative de ces pompons, tout en permettant aux brins, fils, filaments, bandelettes (1) de flotter ou nager librement dans ledit volume (voir figure 2). Cette disposition ne s'oppose pas aux régimes hydrodynamiques choisis.

De la même manière et dans le même but, on peut, suivant une autre forme d'exécution telle que celle illustrée à la figure 3, disposer un ensemble de pompons dans les trois dimensions, de manière à former un réseau (6) qui constituera en soi l'élément de garnissage proprement dit, plusieurs de ces réseaux pouvant être superposés ou accolés de manière à remplir le volume désiré du réacteur.

Ces dispositions peuvent bien évidemment être maintenues immobiles au sein d'un réacteur ou peuvent être animées d'un mouvement quelconque.

L'avantage de telles dispositions apparaît immédiatement à l'homme de l'art. En effet, suivant la nature constitutive de chacun de ces pompons, on pourra réaliser des réactions catalytiques connues, obtenir des effets d'échanges ioniques, favoriser des phénomènes d'absorption et d'adsorption, fixer des agents réactifs, en particulier des agents biochimiques comme des enzymes ou des micro-organismes, etc.

Pour mieux illustrer l'invention, on donnera ci-après des exemples purement d'application du matériau en question dans le cas particulier du domaine du traitement biologique des effluents, ainsi que dans le domaine de la fermentation alcoolique.

On comprendra en effet que dans le domaine de l'épuration, il est surtout recherché des matériaux dont la surface de contact avec l'effluent à épurer est la plus grande possible, de manière à accroître par rapport à l'unité de volume, la quantité de biomasse active disponible, ce qui permet d'augmenter pour un volume déterminé, le poids de micro-organismes fixés sur les surfaces de contact, micro-organismes qui sont responsables de la dégradation des matières organiques présentes dans l'effluent en question.

On peut classer les procédés de traitement biologique des effluents en deux types bien connus de l'homme de l'art : celui impliquant une recirculation des boues et celui impliquant une rétention des boues ou lit fixe.

Or, il se trouve que le matériau souple selon la présente invention convient particulièrement bien à ces deux types de procédés car il est isotrope et procure par rapport aux garnissages traditionnels avec des matériaux rigides ou avec des films de multiples avantages qui vont être examinés ci-après.

Dans les processus biologiques, les supports inertes ne doivent pas s'opposer au brassage du milieu qui assure le contact permanent entre la biomasse fixée sur ces garnissages et le substrat organique.

Le développement de la biomasse sur son support doit être tel :
— qu'il ne limite pas l'agitation du milieu ,
— qu'il ne freine pas l'agitation du milieu ;
— que le substrat puisse pénétrer au sein de cette biomasse.

Les pompons répartis suivant une géométrie déterminée dans les réacteurs n'offrent, contrairement aux éléments de garnissage rigides ou semi-rigides, aucun frein à l'agitation du milieu dans toutes les directions sous l'effet de l'aération en aérobiose où sous l'effet du dégagement gazeux en anaérobiose ou sous l'effet du recyclage de l'effluent à traiter.

Toute la masse liquide est ainsi mise continuellement en contact avec les micro-organismes responsables de l'épuration au même titre que dans les installations à boues libres pour lesquelles il est indispensable d'avoir un mélange total entre les micro-organismes et l'eau à traiter.

A la lumière d'expérimentations conduites par le Demandeur, relatives aux traitements biologiques d'effluents par voies aérobie et anaérobie, il s'est avéré que la dimension (diamètre apparent) des pompons, leur espacement sur les moyens (tels que fils tendeurs) servant à les maintenir et la distance séparant ces moyens doivent être déterminés en fonction du type de traitement (aérobie ou anaérobie), en fonction de la nature des effluents (concentration en substrat organique) et en fonction du rendement d'élimination des matières organiques escompté.

Il est avantageux en effet que les éléments constitutifs des pompons soient suffisamment longs pour pouvoir évoluer autour de leur point d'attache et présenter une surface spécifique satisfaisante et suffisamment courts pour ne pas s'entremêler.

La distance séparant les moyens de fixation des pompons sur des cadres rigides est avantageusement au moins égale au diamètre moyen des pompons, de manière à ce que les brins individuels ne puissent s'emmêler, ce qui nuirait à leur débattement correct dans le milieu liquide et constituerait une amorce de colmatage entre les touffes. Il est bon que cette distance ne soit que légèrement supérieure audit diamètre.

De plus, sur un même moyen de fixation, l'écartement entre les pompons doit être suffisamment grand et au moins égal au rayon des pompons pour permettre la bonne circulation du milieu réactif.

Le matériau, pour être utilisé en traitement biologique, sera avantageusement constitué de fibres textiles synthétiques, ce qui lui confère une grande légèreté ainsi qu'une densité voisine de celle de l'eau.

**0 165 862**

Les volumes géométriques ou les réseaux ou les cadres servant d'élément de fixation des fils tendeurs supportant les pompons pourront donc être réalisés en structures légères facilement manœuvrables par un dispositif de levage relativement simple. Le poids de ces ensembles peut ne pas dépasser quelques kilogrammes par m³ d'encombrement, contrairement aux matériaux plastiques qui dépassent 30 kg/m³.

Les éléments constitutifs des pompons de l'invention sont peu coûteux à l'opposé des matériaux plastiques artificiels. Légers et facilement comprimables pour le transport, ils peuvent être amenés sur site sans grands frais. Les seules dépenses ayant une incidence notable sur le prix du matériau sont le coût des cadres qui peuvent être de conception modulaire et le montage des fils tendeurs équipés des pompons, opération qui est automatisable.

Alors qu'avec les matériaux d'origine minérale (gravier, rocaille) utilisés dans le garnissage des lits bactériens, la surface spécifique est généralement inférieure à 100 m² par m³ de volume apparent de matériau et que, avec les structures en matière plastique (tubes cloisonnés, nids d'abeilles, plaques gaufrées, films, etc), la surface spécifique peut atteindre suivant les cas jusqu'à 300 m² par m³ de volume apparent, les matériaux pompons de l'invention procurent du fait de leur état, des surfaces spécifiques considérables, dépassant 1 000 m²/m³ de volume apparent.

Le matériau support objet de la présente invention a, en raison de sa nature, un comportement souple lorsqu'il est soumis à des déplacements liquides dans toutes les directions du volume qu'il occupe. Ainsi présente-t-il des vides dont les dimensions sont constamment variables, facilitant un bon comportement dynamique.

Cette flexibilité, bien que permettant à la biomasse de s'accrocher sur les pompons empêche un développement trop important de cette biomasse et donc limite les risques de colmatage.

Lorsqu'il atteint une certaine taille, l'excès de film de micro-organismes perpétuellement en mouvement grâce à l'agitation du milieu se détache de lui-même, sous l'effet de l'oxygénation dans les processus aérobies, ou sous l'effet de la remontée des bulles de gaz dans les processus anaérobies.

De même, se déplaçant dans toutes les directions de l'espace autour de leur point d'attache, les éléments enrobés de biomasse permettent une fluidisation de cette biomasse qui favorise la multiplicité des contacts avec le milieu à épurer. La biomasse fixée reste au sein des réacteurs assurant ainsi une constance de concentration en micro-organismes ou en boues.

Quelques exemples vont illustrer les performances obtenues en traitement aérobie et anaérobie avec le matériau objet de la présente invention et les types d'application que l'on peut envisager.

Traitement aérobie

En traitement par voie aérobie, suivant les types d'effluents traités, les procédés d'épuration par lit bactérien ont des rendements d'élimination de la DBO de l'ordre de 60 à 70 %, ces pourcentages étant également influencés par la charge organique appliquée.

Avec les procédés des boues activées et également selon la charge organique appliquée, et selon les types d'effluents, les rendements d'élimination de la DBO peuvent atteindre 95 %, voire occasionnellement plus.

En raison de la grande surface de contact offerte par le matériau objet de la présente invention et donc de la très grande masse de micro-organismes susceptibles de se développer, une installation équipée dudit matériau peut opérer à des charges unitaires organiques supérieures à celles des boues activées traditionnelles et atteignant 3 kg DBO/m³.jour.

Cependant, le matériau doit être mis en œuvre dans des conditions précises pour qu'en tout point du support sur lequel se développe le film de micro-organismes, l'oxygénation puisse se manifester dans de bonnes conditions.

A titre d'exemple, sont indiquées ci-après quelques performances obtenues en aérobiose avec les dispositifs à touffes de fibres en PVA : (chaque pompon étant constitué de 81 000 brins d'un diamètre de 70 microns et pesant 1,4 g), fibres employées comme support ou garnissage dans des procédés couplés boues activées-lits bactériens ou procédés par contact :

— effluent d'industrie textile — réduction DBO 93 %
— effluent d'industrie textile — réduction DCO 66 à 79 %
— effluent d'industrie textile — réduction couleur 42 %
— effluent de teinture — réduction DCO 59 %
— effluent de teinture — réduction couleur 31 %

Le matériau de garnissage ayant permis d'obtenir ces résultats comporte environ 3 kg de fibres par m³ de réacteur, et le calcul théorique montre que sa surface spécifique est comprise entre 2 000 et 2 500 m²/m³.

Traitement anaérobie

Les procédés anaérobies à boue libre continuellement mélangée permettent de traiter 2 à 3 kg de

5

DCO/m$^3$ de réacteur/jour. Les procédés à recirculation de boues ou procédés contacts 3 à 6, les procédés à décantation interne de type UASB 8 à 10, et les lits fixes classiques ou filtres anaérobies 10 à 15.

Un procédé d'épuration utilisant comme support des fibres synthétiques constitutives des pompons selon l'invention permet des charges pouvant dépasser 50 kg DCO/m$^3$ de réacteur/jour pour un garnissage de 1 à 5 kg de support/m$^3$ de réacteur avec un taux d'élimination de la DCO compris entre 60 et 90 selon la nature de l'effluent.

Le procédé est peu sensible aux matières en suspension, celles-ci étant évacuées en même temps que l'excédent de boue, l'isotropie du milieu facilitant leur circulation.

A titre d'exemple, figurent dans le tableau ci-après les performances obtenues avec le matériau objet de la présente invention, dans la méthanisation de substrats organiques.

| Nature du substrat | Volume du réacteur (litre) | Densité du support (kg/m³ de réacteur) | Charge nominale (kg DCO par m³/réacteur/jour) | Volume CH₄ produit (m³/m³ réacteur/jour) | Elimination de la DCO (%) |
|---|---|---|---|---|---|
| | .2,8 | 3,6 | 43 | 14,8 | 56 |
| Vinasse | 7,0 | 3,2 | 56 | 14,0 | 57 |
| de | 7,0 | 8,6 | 42 | 13,1 | 54 |
| betteraves | 2,8 | 12,3 – | 46 | 16,4 | ·60 |
| | 6,2 | 5,1 | 80 | 21,5 | 50/70 |
| Lactosérum déprotéinisé | 6,2 | 5,1 | 65 | 17 | 70 |

Les principales caractéristiques du matériau utilisé pour ce type d'application sont les suivantes :
— fibre polyester de diamètre moyen 70 microns,
— pompon fixé sur un fil tendeur placé verticalement dans le réacteur,
— diamètre des pompons égal à 120 mm,
— distance séparant les points de fixation sur un même fil tendeur : 70 mm,
— distance séparant deux fils tendeurs : 120 mm,
— nombre de brins par pompon : proportionnel à la densité du support (185 000 brins par pompon pour une densité de 5 kg de fibre par m$^3$ de réacteur),
— surface spécifique : comprise entre 5 000 et 5 700 m²/m³ si chaque pompon est composé de 185 000 brins.

Les temps de séjours hydrauliques sont de quelques jours ou quelques heures en fonction de la concentration initiale en charge polluante de l'effluent.

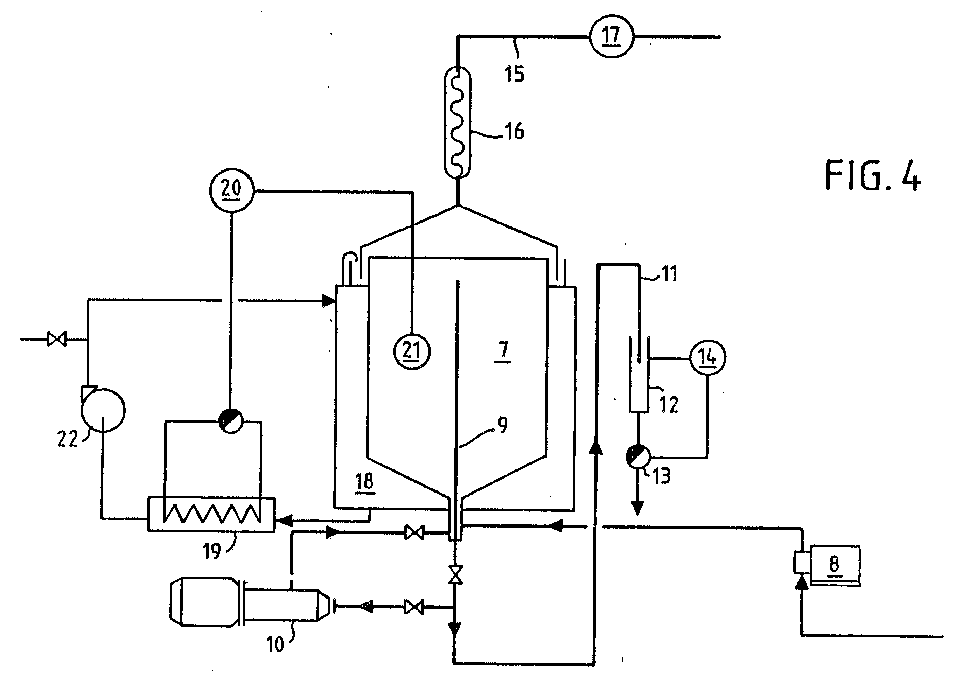

Le schéma de principe des réacteurs de 70 litres est représenté sur la figure 4. Dix cordelettes (5) portant chacune six pompons (3) de diamètre moyen 120 mm et distantes de 70 mm sont montées verticalement, à des distances respectives de 120 mm, dans un panier cylindrique (non représenté) qui occupe toute la partie cylindrique du réacteur (7). Le réacteur (7) est en PVC, son diamètre interne est égal à 400 mm, sa hauteur à 600 mm ; une pompe à membrane (8) dont le débit est réglable introduit le liquide à traiter au fond du réacteur (7) dans lequel le liquide circule de bas en haut avant d'être évacué par surverse dans le tuyau (9) installé selon l'axe du réacteur. Une pompe (10), commandée par une minuterie, permet de recycler le liquide périodiquement.

L'effluent est évacué par un trop-plein (11), puis recueilli dans une éprouvette graduée (12) dont la vidange est obtenue par l'ouverture d'une électrovanne (13) commandée par un pressostat (14). Chaque opération de vidange est enregistrée par un compteur d'impulsions. Le gaz s'échappe par un tuyau (15) raccordé au sommet du couvercle du réacteur. Il est ensuite déshydraté et refroidi dans un condenseur (16) puis traverse un compteur à gaz (17). La température interne du réacteur est régulée par circulation d'eau chaude dans une double enveloppe (18). L'eau est chauffée par une résistance électrique (19) commandée par un régulateur de température (20) relié à une sonde de température (21) immergée dans le réacteur. Une pompe (22) assure la circulation de l'eau chaude en circuit fermé.

Types d'application dans le traitement des effluents

L'emploi de ce garnissage par touffes de fibres textiles peut être envisagé dans différentes circonstances. Comme il peut se présenter sous forme de cadres amovibles qu'il est aisé de manipuler, on peut concevoir d'utiliser ce garnissage disposé en vrac dans les bassins d'aération de stations d'épuration existantes de manière à en améliorer les performances. Grâce à la présence de ce support sur lequel se fixent les micro-organismes, on parvient ainsi à augmenter la concentration en boues des bassins d'aération sans avoir à procéder à des modifications importantes de la conception des stations d'épuration.

En outre, en raison du fait que le support ne s'oppose pas aux mouvements de la masse liquide dans les bassins d'aération (isotropie), les dispositifs utilisés pour aérer les bassins peuvent convenir. Il y a lieu seulement de veiller à augmenter la capacité d'aération de ces dispositifs puisque la concentration en biomasse augmentant, la consommation d'oxygène s'accroît.

Les cadres peuvent également constituer le matériel support d'installations d'épuration à lits bactériens immergés, associant à la fois le principe des boues libres analogues aux boues activées et celui des boues fixées sur les touffes de fibres textiles.

En raison de la perte de charge faible créée par les pompons et du comportement isotrope des mouvements liquides, l'aération des bassins contenant les cadres peut être réalisée par les moyens d'oxygénation traditionnels utilisés dans les procédés boues activées par insufflation d'air.

La faible perte de charge des pompons constitués à partir de fibres textiles souples peut être avantageusement mise à profit dans le traitement d'eaux résiduaires urbaines. Ces pompons, disposés en chapelet sur une cordelette suspendue dans les conduites d'évacuation des eaux immeubles, peuvent constituer l'âme d'un lit bactérien de faible section mais de grande hauteur. L'eau ruisselant le long du chapelet de pompons s'épure au fur et à mesure qu'elle s'écoule. Une légère aération à la base de la conduite suffit d'une part pour apporter l'oxygène nécessaire au processus biologique aérobie, d'autre part pour décolmater la conduite si l'épaisseur du film de micro-organismes sur les fibres est trop importante.

Le décolmatage par l'air permet également l'autocurage du lit constitué par les pompons. Un tel dispositif intégrable dans tout réseau d'évacuation d'eaux usées est particulièrement économe en énergie puisqu'il utilise l'écoulement gravitaire des eaux.

Dans les traitements anaérobies enfin, l'emploi des matériaux selon l'invention constitue une solution de choix permettant de retenir la biomasse active avec un support facile à mettre en œuvre, peu coûteux et léger. La circulation du substrat à épurer n'est pas freinée par la présence des pompons au sein des réacteurs. L'isotropie du milieu n'est donc pas affectée.

D'après les essais réalisés en outre, il se confirme que les charges admissibles en DCO rapportées à l'unité de volume de réacteur sont très supérieures à celles obtenues avec d'autres supports.

Fermentation éthanolique sur milieu synthétique

On opère dans un réacteur sous forme de colonne, d'un volume total de 5 litres et d'un diamètre de 7 cm, garni de 17 pompons d'un rayon de 5 cm (distance entre le point d'attache et l'extrémité de la fibre). Les pompons sont distants de 5 cm les uns des autres et sont constitués en fibres de PVA ; chaque pompon comporte 81 000 brins de 70 μm et pèse 1,4 g. Le réacteur est suivi d'un décanteur vertical de 2,5 litres servant au recyclage de la biomasse.
— souche utilisée : bactérie Zymomonas mobilis floculante ZM4F ;
— milieu synthétique à base de glucose non stérilisé ; milieu concentré (500 à 600 g/l) dilué avant utilisation (en ligne).
Les résultats figurent au tableau ci-dessous.

| Durée (jours) | Sucres consommés g/l | Ethanol produit g/l | Débit. ml/h | Taux dilution h⁻¹ | Productivité g/l.h | % rendement théorique |
|---|---|---|---|---|---|---|
| 1 | 96,6 | 45 | 300 | 0,06 | 2,7 | 91,3 |
| 4 | 95,2 | 47,3 | 600 | 0,12 | 5,7 | 97,4 |
| 10 | 90 | 48,1 | 1240 | 0,240 | 11,9 | 96,2 |
| 16 | 95,7 | 48,1 | 2000 | 0,40 | 19,2 | 98,5 |
| 20* | 101,6 | 51 | 2400 | 0,40 | 24,5 | 99,4 |
| 25** | 115 | 57,3 | 2880 | 0,59 | 33 | 97,7 |
| 28 | 114 | 57,3 | 3300 | 0,66 | 37,8 | 98,5 |

7

**0 165 862**

Tableau  (Suite)

| Durée (jours) | Sucres consommés g/l | Ethanol produit g/l | Débit. ml/h | Taux dilution h-1 | Productivité g/l.h | % rendement théorique |
|---|---|---|---|---|---|---|
| 29 | 112 | 56,4 | 3740 | 0,75 | 42,2 | 98,7 |
| 37 | 118,5 | 53,65 | 4300 | 0,86 | 46,2 | 89 |
| 40 | 115,8 | 50,5 | 4800 | 0,96 | 48,5 | 85,5 |
| 45 | 108,8 | 50,5 | 4900 | 0,98 | 49,5 | 91 |
| 50 | 114,7 | 48,2 | 5000 | 1 | 48,2 | 82,4 |
| 55 | 104 | 47,3 | 5280 | 1,06 | 50,2 | 89,2 |

Il va de soi que tous les avantages des éléments de garnissage selon l'invention, avantages qui ont été exploités dans le domaine de l'épuration des effluents et de la fermentation alcoolique, peuvent être aussi bien mis à profit dans tout autre procédé physique et/ou chimique, et/ou biologique, et/ou biochimique, dans lequel on recherche la mise en contact intime des éléments appelés à réagir entre eux ou à être mis en présence les uns des autres, à la condition que lesdits éléments de garnissage puissent être maintenus en suspension dans un fluide, que celui-ci soit liquide ou gazeux.

De même, ces éléments de garnissage peuvent servir dans les cas où il est recherché de disposer de surfaces importantes dans des phénomènes d'absorption ou d'adsorption sélective, ainsi que pour les séparations de phases.

## Revendications

1. Un arrangement de matériau de garnissage comprenant une pluralité de pompons (3), chaque pompon étant constitué par une pluralité de brins, de fils, de filaments ou de bandelettes (1) réunis en leur milieu, les points assurant les réunions de ces brins de fils, de filaments ou de bandelettes de chaque pompon étant maintenu fixe par rapport à eux-mêmes par un moyen support ; caractérisé par le fait que chacun des brins, des fils, des filaments ou des bandelettes a une longueur telle et est monté de façon telle que lorsque plongé dans un milieu fluide (4) liquide ou gazeux chacun d'entre eux soit indépendant dans ses mouvements et qu'il puisse se déployer librement et aisément sans que lesdits brins, fils, filament ou bandelettes ne s'entremêlent dans un même pompon, deux desdits points de réunion de pompons voisins étant montés de façon que lorsque les pompons sont plongés dans le milieu fluide les brins, les fils, les filaments ou les bandelettes desdits pompons voisins ne puissent s'entremêler.

2. Arrangement de matériau de garnissage selon la revendication 1 caractérisé par le fait que la surface spécifique de chaque pompon est ajustable en fonction des besoins de l'application à laquelle cet arrangement est destiné et peut aisément dépasser 1.000 m²/m³ de volume apparent.

3. Arrangement selon la revendication 1 ou 2 caractérisé par le fait que le moyen support maintenant chaque pompon en position fixe par rapport aux pompons voisins est un élément d'accrochage commun souple ou rigide faisant office de fil tendeur (5).

4. Arrangement selon la revendication 3 caractérisé par le fait que plusieurs éléments d'accrochage font partie d'un ensemble plan (cadre), d'un réseau à trois dimensions (6) ou de tout autre volume géométrique.

5. Arrangement selon la revendication 3 ou 4 caractérisé par le fait que la distance séparant les points de fixation de chaque pompon sur un même fil tendeur est au moins égale au rayon moyen de ces pompons et que la distance séparant deux fils tendeurs voisins est au moins égale au diamètre moyen des pompons.

6. Arrangement selon l'une quelconque des revendications 1 à 5 caractérisé par le fait que les brins, fils, filaments ou bandelettes (1) constituant chaque pompon (3) sont en une matière inerte destinée à servir de supports ou d'autant de zones de liaison pour les substances destinées à servir de substances catalytiques, de sites d'échanges, de réactifs ou d'agents réactifs par rapport aux substances ou réactifs présents dans le milieu fluide (4).

7. Arrangement selon l'une quelconque des revendications 1 à 5 caractérisé par le fait que les brins, fils, filaments ou bandelettes (1) sont en un matériau constituant lui-même l'agent réactif ou le catalyseur pour les constituants présents dans le milieu fluide (4).

8. Application d'un arrangement selon l'une quelconque des revendications 1 à 7 dans le domaine de la catalyse, de l'épuration des effluents, de la fermentation alcoolique, des réactions biologiques et/ou biochimiques, des séparations de phases.

8

**Claims**

1. An arrangement of surface-providing material comprising a plurality of pompons (3), each pompon being constituted by a plurality of strands, wires, filaments or strips (1) joined at their middle, the junction points of the strands, wires, filaments, or strips of each pompon being kept constant relative to each other by a means of a support, characterized by the fact that each of the strands, wires, filaments, or strips has a length such that it is mounted in such a way that when it is plunged in a fluid (4) liquid or gaseous medium, each of them is independent in its movements and it can be deployed freely and easily without the said strands, wires, filaments, or strips entangling within the same pompon, two of the said junction points of neighbouring pompons being mounted in a manner such that when the pompons are plunged in the fluid medium the strands, wires, filaments, or strips of the said neighbouring pompons can not entangle.

2. An arrangement of surface-providing material according to Claim 1, characterized by the fact that the specific surface of each pompon is adjustable depending on the needs of the application for which the arrangement is intended and can easily exceed 1 000 $m^2/m^3$ apparent volume.

3. An arrangement of surface-providing material according to Claim 1 or 2, characterized by the fact that the means of support holding each pompon in a fixed position relative to the neighbouring pompons is a common flexible or rigid element for hooking on to, acting as a supporting wire (5).

4. An arrangement of surface-providing material according to Claim 3, characterized by the fact that several elements for hooking on to form parts of a planar assembly (frame), a three-dimensional network (6) or any other geometric volume.

5. An arrangement of surface-providing material according to Claim 3 or 4, characterized by the fact that the distance separating the attachment points of each pompon on the same wire is at least equal to the mean radius of these pompons and that the distance separating two neighbouring supporting wires is at least equal to the mean diameter of the pompons.

6. An arrangement of surface-providing material according to any one of Claims 1 to 5, characterized by the fact that the strands, wires, filaments or strips (1) constituting each pompon (3) are made of an inert material to serve as supports or as an equivalent number of attachment zones for the substances to be used as catalytic substances, exchange sites or reactive agents with respect to the substances or constituents present in the ambient fluid medium (4).

7. An arrangement of surface-providing material according to any one of Claims 1 to 5, characterized by the fact that the strands, wires, filaments or strips (1) are made of a material itself constituting the reactive agent or catalyst for the constituents present in the fluid medium (4).

8. Application of an arrangement according to any one of Claims 1 to 7 in the field of catalysis, effluent purification, alcoholic fermentation, biological and/or biochemical reactions and phase separations.

**Patentansprüche**

1. Füllkörperanordnung mit einer Vielzahl von Büscheln (3), wobei jedes Büschel aus einer Vielzahl von in ihrer Mitte verbundenen Stückchen, Fäden, Fasern oder Folienbändchen (1) besteht und die Verbindungspunkte der Fadenstückchen, der Filamente oder der Folienbändchen eines jeden Büschels durch ein Trägermittel gegenseitig festgehalten werden, dadurch gekennzeichnet, daß jedes der Stückchen, Fäden, Fasern oder Folienbändchen eine solche Länge aufweist und so befestigt ist, daß beim Eintauchen in ein flüssiges oder gasförmiges Fluid (1) jedes von diesen unabhängig beweglich ist und sich frei und leicht entfalten kann, ohne daß die Stückchen, Fäden, Fasern oder Folienbändchen sich innerhalb desselben Büschels vermengen, und daß die Befestigungspunkte von zwei benachbarten Büscheln so angeordnet sind, daß die Stückchen, die Fäden, die Fasern oder die Folienbändchen der benachbarten Büschel beim Eintauchen der Büschel in das Fluid sich nicht vermengen können.

2. Füllkörperanordnung nach Anspruch 1, dadurch gekennzeichnet, daß die spezifiische Oberfläche eines jeden Büschels je nach Verwendungszweck der Anordnung einstellbar ist und ohne weiteres 1 000 $m^2/m^3$, bezogen auf das scheinbare Volumen, überschreiten kann.

3. Anordnung nach Anspruch 1 oder 2, dadurch gekennzeichnet, daß das Trägermittel, das jedes Büschel in einer festen Position in Bezug auf die Nachbarbüschel hält, ein übliches steifes oder nachgiebiges Befestigungselement ist, das als Fadenspanner (5) dient.

4. Anordnung nach Anspruch 3, dadurch gekennzeichnet, daß mehrere Befestigungselemente Teil einer flachen Einheit (Rahmen), eines dreidimensionalen Gitters (6) oder eines anderen geometrischen Volumens sind.

5. Anordnung nach Anspruch 3 oder 4, dadurch gekennzeichnet, daß der Abstand zwischen den Befestigungspunkten der Büschel desselben Spannfadens mindestens gleich groß dem mittleren Radius der Büschel ist, und daß der Abstand zwischen zwei benachbarten Spannfäden mindestens gleich dem mittleren Durchmesser eines Büschels ist.

6. Anordnung nach einem der Ansprüche 1 bis 5, dadurch gekennzeichnet, daß die Stückchen, Fäden, Fasern oder Folienbändchen (1), aus denen jedes Büschel (3) besteht, aus inertem Material bestehen, das als Träger oder ebenso als Verbindungsbereich für Katalysatorsubstanzen, als Austauschplatz, als Reagenz oder Reaktionsmittel in Bezug auf die Substanzen oder Reagenzien in dem Fluid (4) dienen kann.

7. Anordnung nach einem der Ansprüche 1 bis 5, dadurch gekennzeichnet, daß die Stückchen, Fäden, Fasern oder Folienbändchen (1) aus einem Material bestehen, das selbst ein Reaktionsmittel oder der Katalysator für die in dem Fluid (4) vorhandenen Bestandteile ist.

8. Anwendung einer Anordnung nach einem der Ansprüche 1 bis 7, auf dem Gebiet der Katalyse, der Abwasserreinigung, der alkoholischen Gärung, der biologischen und/oder biochemischen Reaktionen und der Phasentrennung.

0 165 862

FIG.1

FIG.2

FIG.3

FIG. 4

0 165 862